# EUROPÄISCHE PATENTSCHRIFT

(11) **EP 3 382 977 B1**
(45) Veröffentlichungstag und Bekanntmachung des Hinweises auf die Patenterteilung: **17.06.2020**
(21) Anmeldenummer: 17164204.4
(22) Anmeldetag: 31.03.2017
(51) Int. Cl.: H04W 12/00, H04L 29/06, H04W 12/06

(54) **VERFAHREN ZUM AUTHENTISCHEN PAIRING TECHNISCHER EINRICHTUNGEN**
METHOD FOR AUTHENTIC PAIRING OF TECHNICAL EQUIPMENT
PROCÉDÉ D'APPARIEMENT AUTHENTIQUE DE DISPOSITIFS TECHNIQUES

(43) Veröffentlichungstag der Anmeldung: 03.10.2018
(73) Patentinhaber: Scheidt & Bachmann GmbH, 41238 Mönchengladbach (DE)
(72) Erfinder: Miller, Norbert, 41063 Mönchengladbach (DE)
(74) Vertreter: Rausch Wanischeck-Bergmann Brinkmann

(56) Entgegenhaltungen:
- US-A1- 2011 028 160
- US-A1- 2013 282 438

## Beschreibung

Im Stand der Technik ist es bekannt, eine Verbindung, ein sogenanntes Pairing, zwischen zwei technischen Einrichtungen herzustellen, so dass eine nutzerverursachte Handlung an der einen Einrichtung eine Reaktion der zweiten Einrichtung nach sich zieht. Die Einrichtungen können dabei drahtlos oder drahtgebunden und insbesondere nur zeitweilig miteinander verbunden sein.

Um ein authentisches Pairing herzustellen, sind Mechanismen bekannt, die Nutzernamen und Kennwörter verwenden, die nur ein authentischer Nutzer kennt oder kennen sollte. Die Authentifizierung über Nutzernamen und Kennwort ist dabei ein eher lästiger Vorgang, der insbesondere im Hinblick auf ein Pairing, das nur für kurze Zeit vorgenommen werden soll, häufig als unakzeptabel empfunden wird.

Daher wird im Stand der Technik auf ungesicherte Verfahren zurückgegriffen, wenn etwa ein kurzzeitiges drahtloses Pairing zwischen zwei technischen Einrichtungen durchgeführt werden soll. Nachteilig an den aus dem Stand der Technik bekannten Verfahren ist die Tatsache, dass sie leicht zu manipulieren sind. Ein Sender in der ersten technischen Einrichtung sendet Datentelegramme, die nicht verschlüsselt für zweite technische Einrichtungen ohne weiteres lesbar sind und anhand derer eine zweite technische Einrichtung die erste technische Einrichtung als "zu pairen" erkennen kann. Ein Täter könnte also die im Datentelegramm enthaltenen Identifikationsdaten einer ersten technischen Einrichtung verwenden, um einen weiteren Sender damit zu programmieren und in betrügerischer Absicht einen datentechnischen "Clone" der entsprechenden ersten technischen Einrichtung für Missbrauchs- oder Manipulationszwecke herzustellen.

Ein großes Anwendungsgebiet entsprechender Technologie ist der Bereich, in welchem Verkaufsvorgänge unter Nutzung der Elektronik automatisiert werden. Ein Nutzer möchte ein Produkt aus einem Automaten beziehen. Hieran schließt sich ein Bezahlvorgang an. Dieser soll möglichst bargeldlos sein, weshalb der Nutzer vorzugsweise ein Endgerät verwendet, welches geeignet ist, eine eineindeutige Identifikation zu versenden, so dass auf den Nutzer und möglicherweise hinterlegte Bezahloptionen, seine Telefonrechnung oder sonstige Möglichkeiten rückgeschlossen werden kann. So kann beispielsweise ein Nutzer mit seinem Smartphone an einem Automaten die Herausgabe eines Produktes bewirken, wobei der Bezahlvorgang im Hintergrund, beispielsweise in einem Zentralrechnersystem, das mit dem Smartphone und dem Automaten verbunden ist, elektronisch abgewickelt wird. Umgekehrt jedoch liegt es auch im Interesse der Händler, Kunden auf Verkaufsangebote hinzuweisen. So ist es inzwischen bekannt, dass beim Betreten von Bereichen automatisch Werbung und Informationen empfangen werden, die auf Smartphones dem Nutzer präsentiert werden. Dabei sind die Verkaufsautomaten beispielsweise mit einer Kennung versehen, die dem Smartphone bekannt sein muss. Nur wenn das Smartphone einen Datensatz empfängt, den es kennt, wird es, üblicherweise gesteuert durch eine App, weitere Informationsinhalte präsentieren. Hier ergibt sich ein großer Raum für Manipulationen jeglicher Art, beispielsweise die beschriebenen Clones, die dem Zweck dienen sollen, den Nutzer zu falschen Automaten zu führen und dergleichen.

Aus dem Stand der Technik ist beispielsweise die US 2011/0028160 A1 bekannt. Sie offenbart ein Verfahren bei dem die Anwesenheit eines Mobiltelefons in einem begrenzten Raum detektiert wird. Hierzu werden Informationen mit Bezug auf die Anwesenheit des Mobiltelefons an einen Server übertragen. Der Server verarbeitet die Information und schreibt eine darauf basierende Belohnung in einem Benutzerkonto gut, welches mit dem Mobiltelefon identifikationstechnisch verbunden ist.

Ferner ist aus dem Stand der Technik die US 2013/0282438 A1 bekannt. Sie offenbart Verfahren, Systeme und Vorrichtungen zur Bereitstellung benutzerrelevanter Informationen für Vorrichtungen innerhalb der unmittelbaren Umgebung eines Benutzers. Ein nutzerbezogener, drahtloser Identitätstransmitter sendet periodisch Nachrichten aufweisend verschleierte Kennungen. Ein Nahfeldsendeempfänger kann die ausgesendeten Nachrichten empfangen und an einen zentralen Server weiterleiten, welcher die darin enthaltenen Informationen verarbeitet. Basierend auf nutzer- und empfängerbezogenen Kategorien kann der Zentralserver gespeicherte Profilinformationen des Nutzers identifizieren.

Ein weiteres Problem besteht jedoch in der logistischen Abwicklung derartiger Vorgänge. So muss eine Warenwirtschaft betrieben werden, damit der Kunde nicht vor leeren Automaten steht. Darüber hinaus sollen aber auch die aufgestellten Einheiten zum einen vom Materialwert, zum anderen aber auch von der Manipulationssicherheit her möglichst einfach sein und wenig anfällig.

Daher ist es **Aufgabe** der Erfindung, ein Pairing-Verfahren bereitzustellen, mit dem eine authentisierte Verbindung möglichst gegen Manipulation abgesichert hergestellt werden kann.

Vorteilhaft soll eine Verbindung zwischen zwei technischen Einrichtungen drahtlos und ohne Log-In-Prozedur hergestellt werden können. Es soll, wenn irgend möglich, die Verwendung störunanfälliger technischer Einrichtungen gefördert werden und die Bewältigung der logistischen Aufgaben vereinfacht werden.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen.

Weiterhin schlägt die Erfindung zur technischen **Lösung** dieser Aufgabe ein System mit den Merkmalen des Anspruches 12 vor. Weitere Vorteile und Merkmale ergeben sich aus den darauf zurückbezogenen Unteransprüchen.

Ausgehend von dem beschriebenen Stand der Technik werden erfindungsgemäß ein Verfahren und ein System vorgeschlagen, bei dem die Inhalte des Datentelegramms veränderlich sind; d.h. die Zugangskennung und die eineindeutigen Gerätekennungen werden zeitabhängig neu generiert als Zugangskennung abhängig von einer Zeit t₁ und als Gerätekennungen abhängig von einer Zeit t₂, und vom jeweiligen Gerät. Nachfolgend werden diese Größen "Zugangskennung(t₁)" und "Gerätekennung(t₂, Device)" genannt. Dazu ist der Zentralrechner mit einem Code-Generator ausgerüstet. Dieser Code-Generator generiert periodisch neue Werte Zugangskennung(t₁) und Gerätekennung(t₂, Device), wobei erfindungsgemäß weiter vorgeschlagen wird, die Zugangskennung(t₁) weniger häufig neu zu generieren als die Gerätekennung(t₂, Device). Dies ist darin begründet, dass - wie weiter unten beschrieben - die Zugangskennung(t₁) an alle am Verfahren beteiligten technischen Einrichtungen, verteilt werden muss, während die Gerätekennung(t₂, Device) nur an alle ersten technischen Einrichtungen versendet werden muss, da die diese mit dem verfahrensgemäßen Sender ausgestattet sind.

Da mit dem beschriebenen Verfahren Angriffe auf das System in der oben beschriebene Weise verhindert werden sollen, wird vorgeschlagen, insbesondere die Gerätekennung(t₂, Device) so häufig zu ändern, dass es erwartbar nicht möglich ist, einen Angriff auf eine reales System fertigzustellen, bevor die Gerätekennung(t₂, Device) geändert sind. Erfindungsgemäß wird daher vorgeschlagen, die Gerätekennung(t₂, Device) etwa alle 5 bis 15 Minuten zu ändern und die Zugangskennung(t₁) etwa alle 1 bis 10 Tage.

Sobald die Gerätekennung(t₂, Device) und/oder die Zugangskennung(t₁) vom Code-Generator neu generiert ist, sendet der Zentralrechner die neuen Kennungen über das Gerätedatennetzwerk an alle ersten technischen Einrichtungen. Jede erste technische Einrichtung aktualisiert die Betriebsparameter ihres Senders entsprechend, so dass jede erste technische Einrichtung Datentelegramme mit aktuellem Dateninhalt aussendet. Der Zentralrechner speichert die jeweils gültige Zugangskennung(t₁) und die Gerätekennung(t₂, Device), um, basierend auf diesen Daten, später das Pairing durchführen zu können.

Sobald die Zugangskennung(t₁) vom Code-Generator neu generiert ist, überträgt der Zentralrechner die Zugangskennung(t₁) über das mobile Netzwerk an zweiten technischen Einrichtungen, die an dem erfindungsgemäßen Verfahren teilnehmen. Jede am Verfahren teilnehmende zweite technische Einrichtung sucht dann nach der aktuellen Zugangskennung(t₁). um ein Pairing mit einer ersten technischen Einrichtung zu initiieren. An der zweiten technischen Einrichtung muss dazu das Netzwerk aktiviert sein, welches zu den Sendern der ersten technischen Einrichtungen kompatibel ist.
Es muss also die Zugangskennung(t₁) an alle technischen Einrichtungen verteilt werden, während die Gerätekennung(t₂, Device) nur an die ersten verteilt werden technischen Einrichtungen muss. Die ersten technischen Einrichtungen senden periodisch wiederholt Datentelegramme mit wenigstens der Zugangskennung(t₁) und der Automatenkennung(t₂, Device) aus. Dabei wird die Häufigkeit der Aussendungen so gewählt, dass eine zweite technische Einrichtung eines Nutzers, der sich einer ersten technischen Einrichtung nähert, ohne empfundene Verzögerung wenigstens ein Datentelegramm empfangen kann, sobald sich der Nutzer in einer Entfernung von der ersten technischen Einrichtung befindet, unterhalb derer ein Pairing durchgeführt werden soll.
In einer Ausführungsform kann vorgesehen sein, die erste technische Einrichtung mit einem Näherungssensor auszustatten und so einzurichten, dass sie nur dann Datentelegramme aussendet, wenn die Näherungssensoren die Annäherung eines potenziellen Nutzers detektieren.
Das Aussenden der Datentelegramme durch die erste technische Einrichtung erfolgt drahtlos in einem Datenfunknetz, für welches gleichermaßen die ersten und die zweiten technischen Einrichtungen eingerichtet sind, beispielweise: Bluetooth, Bluetooth Low Energy, WLAN, ANT, WiMax, WPAN, ZigBee oder Z-Wave.
Die Sendleistung des Senders in den ersten technischen Einrichtungen ist dabei so gewählt, dass zweite technische Einrichtungen Datentelegramme empfangen können, wenn sie sich unterhalb einer systemseitig vorgesehenen Entfernung von ersten technischen Einrichtungen befinden.

Wenn systemseitig vorgesehen ist, dass sich potenzielle Nutzer mit zweiten technischen Einrichtungen den ersten technischen Einrichtungen zu Fuß nähern und ein Pairing unterhalb eines Abstands von 3 Metern möglich sein soll, ergibt sich eine sinnvolle Sendehäufigkeit für die erste technische Einrichtung von einem Datentelegramm pro 1 bis 3 Sekunden.

Eine zweite technische Einrichtung empfängt nun wenigstens ein Datentelegramm von wenigstens einer ersten technischen Einrichtung. Für den Fall, dass die zweite technische Einrichtung von genau einer ersten technischen Einrichtung Datentelegramme empfangen hat, wählt die zweite technische Einrichtung aus, dass mit der ersten technischen Einrichtung ein Pairing durchgeführt werden soll. Für den Fall, dass die zweite technische Einrichtung von mehr als einer ersten technischen Einrichtung Datentelegramme empfangen hat, muss eine Auswahl getroffen werden, mit welcher ersten technischen Einrichtung ein Pairing durchgeführt werden soll (siehe unten).

Die zweite technische Einrichtung sendet Daten über ein zweites Datennetzwerk an den Zentralrechner. Diese Daten enthalten, neben der systemweit eineindeutigen Kennung der zweiten technischen Einrichtung selbst, wenigstens auch die Daten aus dem von der ausgewählten ersten technischen Einrichtung empfangenen Datentelegramm, nämlich wenigsten Zugangskennung(t₁) und Gerätekennung(t₂, Device).

Der Zentralrechner ist mit einem Algorithmus ausgestattet, das Verfahren datentechnisch ablaufen zu lassen; der Algorithmus ist in wenigstens einem maschinenausführbaren Programm gespeichert und für den Zentralrechner ausführbar eingerichtet. Weiter hat der Zentralrechner in wenigstens einer Datenbank die Daten gespeichert, die für die Durchführung des erfindungsgemäßen Verfahrens erforderlich sind. Diese Daten sind wenigstens: Die aktuell gültige Zugangskennung(t₁) für das systemgemäße Verfahren, die aktuell gültige Gerätekennung(t₂, Device) für jede individuelle erste technische Einrichtung sowie systemweit eineindeutige, fest zugeordnete Kennungen für alle ersten und zweiten technischen Einrichtungen. Auf Basis dieser Daten und mithilfe des Algorithmus bestimmt der Zentralrechner, nachdem er die Daten von der zweiten technischen Einrichtung empfangen hat, dass sich die zweite technische Einrichtung in der Nähe von der ersten technischen Einrichtung befindet und mit dieser interagieren kann. Der Zentralrechner pairt die erste und die zweite technische Einrichtungen durch Herstellen eines datentechnischen Austauschs von Zustandsdaten, Kommandos und Bestätigungen zwischen den beiden Einrichtungen; das Pairing der Einrichtungen wird also am gemeinsamen Zentralrechner durchgeführt.

Das erfindungsgemäße Pairing von genau einer ersten und genau einer zweiten technischer Einrichtung ist damit abgeschlossen. Es können am Zentralrechner mehrere Pairings gleichzeitig durchgeführt werden, wobei jede erste und jede zweite technische Einrichtung zu jedem Zeitpunkt höchsten an einem Pairing beteiligt sein kann.

In einer bevorzugten Ausführungsform ist die erste technische Einrichtung ein Verkaufsautomat, insbesondere ein Verkaufsautomat zum Verkauf von Waren. In dieser Ausführungsform sendet der Zentralrechnung, nachdem das Pairing durchgeführt ist, über das zweite Netzwerk weitere Daten an die zweite technische Einrichtung. Diese Daten enthalten insbesondere Angaben zu Waren, die der Verkaufsautomat verkaufsbereit beinhaltet, also eine Liste von verfügbaren Artikeln und Preisen. Diese Liste wird auf einem Bildschirm der zweiten technischen Einrichtung zur Anzeige gebracht, und ein im System registrierter Nutzer kann wenigstens einen Artikel wählen und kaufen. Der Verkaufsvorgang selbst wird durch den Datenaustausch zwischen der zweiten technischen Einrichtung und dem Zentralrechner sowie dem Verkaufsautomaten und dem Zentralrechner durchgeführt und endet damit, dass der Verkaufsautomat den wenigstens einen gekauften Artikel ausgibt und der Zentralrechner den Verkauf des Artikels an den registrierten Nutzer der zweiten technischen Einrichtung berechnet. Selbstverständlich kann der Verkaufsvorgang auch durch einen Abbruch durch den Nutzer enden, bevor ein Artikel ausgegeben ist. Die Durchführung des Verkaufsvorgangs selbst ist nicht erfindungswesentlich.

In einer weiteren bevorzugten Ausführungsform ist die zweite technische Einrichtung ein mobiles Endgerät. Nach Empfang eines erfindungsgemäßen Datentelegramms von der ersten technischen Einrichtung startet das mobile Endgerät eine erfindungsgemäße App und sendet Daten über ein mobiles Netzwerk an den Zentralrechner. In dieser Ausführungsform kann die systemweit eineindeutige Kennung des mobilen Endgeräts eine Mobilfunk-Telefonnummer sein, eine Mobiltelefon-ID, eine IMEI-Nummer (International Mobile Station Equipment Identity), eine MAC-Adresse (Media-Access-Control-Adresse, auch bekannt als Ethernet-ID, Airport-ID oder WiFi-ID), eine Bluetooth MAC-Adresse, eine Nutzerkennung, unter der ein Nutzer sein Nutzerkonto in dem System führt, eine Nutzerkennung, unter der ein Nutzer seine verfahrensgemäße App registriert hat, eine Nutzer-Identifikation, unter der die App erworben wurde, oder jedwede andere systemweit eineindeutige Kennung, die es erlaubt, das mobile Endgerät zu identifizieren. Mobile Endgeräte im Sinne der Erfindung sind tragbare Einheiten mit wenigstens einem digitalen Datenprozessor, einem digitalen Datenspeicher, einer Energieversorgung und Kommunikationsmitteln. Mobile Endgeräte sind in einer bevorzugten Ausführungsform, massenmarkt-verfügbare mobile Endgeräte wie Smartphones, Tablet-Computer, Spielkonsolen, Laptop-Computer, Netbooks, Datenbrillen, Smart-Watches oder andere körpernah getragene Endgeräte, usw.

Der Datenaustausch zwischen der ersten technischen Einrichtung und dem Zentralrechner kann permanent aktiv sein oder zeitlich periodisch aktiviert werden oder abhängig vom Aufstellort der ersten technischen Einrichtung oder vom Zentralrechner aktiviert und deaktiviert werden. Das erste Datennetzwerk kann basieren auf einem digitalen Mobilfunknetz (GSM, GPRS, UMTS, LTE), einer WLAN-Verbindung, einer Bluetooth-Kopplung, einer Infrarot-Ankopplung oder jeder anderen geeigneten verdrahteten oder drahtlosen Datenverbindung oder eine Kombination solcher Verbindungen.

Der Datenaustausch zwischen einer zweiten technischen Einrichtung und dem Zentralrechner kann permanent aktiv sein oder zeitlich periodisch aktiviert werden oder abhängig vom Ort der zweiten technischen Einrichtung oder der Anzahl empfangener Datentelegramme aktiviert werden. Das zweite Datennetzwerk kann basieren auf einem digitalen Mobilfunknetz (GSM, GPRS, UMTS, LTE) oder auf einem lokalen Datenfunknetz wie beispielsweise eine WLAN-, Bluetooth- oder Bluetooth Low Energy (BLE) Verbindung (über eine ortgebundene Relais-Station, die ihrerseits mit dem Zentralrechner kommuniziert) oder auf jeder anderen geeigneten drahtlosen Datenverbindung.

Das erste und das zweite Datennetzwerk können auf identischen Netzwerktechnologien- und -topologien basieren.

Das Datenaustauschprotokoll für das erste und/oder zweite Datennetzwerk kann in einer bevorzugten Ausführungsform TCP/IP sein; in einer besonders bevorzugten Ausführungsform kommunizieren die erste und/oder die zweite technische Einrichtung mit dem Zentralrechner über eine Internet-Verbindung gemäß http-Standard oder über eine gesicherte Internet-Verbindung gemäß https-Standard.

Der Zentralrechner im Sinne des erfindungsgemäßen Verfahrens kann physisch aus einer oder mehreren Rechnereinheiten (Servern) und Datenbanken bestehen, die an einem Ort oder an mehreren geographischen Orten aufgestellt und datennetzwerkmäßig miteinander verbunden sind. Der wenigstens eine geographische Ort des Zentralrechners ist verfahrensgemäß nicht relevant; insbesondere können der Zentralrechner und seine wenigstens eine Datenbank Bestandteil wenigstens eines Rechenzentrums sein. Insbesondere können der Zentralrechner und seine wenigstens eine Datenbank als virtueller Server eingerichtet sein. Insbesondere können der Zentralrechner und seine wenigstens eine Datenbank über Internetschnittstellen adressierbar und als "cloud"-Implementierung eingerichtet sein.

In einem erfindungsgemäßen System ist es möglich, dass an einem Ort mehrere erste technische Einrichtungen aufgestellt sind, die nach dem erfindungsgemäßen Verfahren mit einer zweiten technischen Einrichtung eines Nutzers gepairt werden können. Dem entsprechend kann eine zweite technische Einrichtung wenigsten ein Datentelegramm von mehr als einer ersten technischen Einrichtung empfangen. Für diesen Fall muss eine Auswahl getroffen werden, mit welcher ersten technischen Einrichtung ein Pairing durchgeführt werden soll. In diesem Fall muss deshalb der Nutzer bzw. die zweite technisch Einrichtung entscheiden, mit welcher genau einer ersten technischen Einrichtung ein Pairing initiiert werden soll:
In einer Ausführungsform senden mehrere erste technische Einrichtungen über ihren jeweiligen Sender jeweils Datentelegramme mit identischen Zugangskennungen(t₁), unterschiedlichen Automatenkennungen(t₂, Device) und zusätzlich mit einrichtungsspezifischen Sendefeldstärkewerten. Eine zweite technische Einrichtung empfängt jeweils wenigstens ein Datentelegramm von mehreren ersten technischen Einrichtungen. Anhand der Auswertung der empfangenen Sendefeldstärkewerte und der gemessenen Empfangsfeldstärke der Datentelegramme entscheidet die zweite technische Einrichtung, zu welcher ersten technischen Einrichtung sie welchen Abstand hat, und wählt anhand des Abstands die zu pairende erste technische Einrichtung. Bevorzugt kann die zweite technische Einrichtung die nächstgelegene erste technische Einrichtung zum Pairen auswählen. Die zweite technische Einrichtung sendet die Daten der ausgewählten ersten technischen Einrichtung über das zweite Datennetzwerk an den Zentralrechner, und das Pairing wird am Zentralrechner durchgeführt.

In einer weiteren Ausführungsform senden mehrere erste technische Einrichtungen über ihren jeweiligen Sender jeweils Datentelegramme mit wenigstens identischen Zugangskennungen(t₁) und unterschiedlichen Gerätekennung(t₂, Device), Eine zweite technische Einrichtung empfängt jeweils wenigstens ein Datentelegramm von mehreren ersten technischen Einrichtungen. Aufgrund der Tatsache, dass Datentelegramme von mehreren ersten technischen Einrichtungen empfangen wurden, wird dem Nutzer über eine Bildschirmmeldung der zweiten technischen Einrichtung eine Liste der auswählbaren ersten technischen Einrichtungen dargestellt. Jeder auswählbare erste technische Einrichtung ist dabei mit einer menschenlesbaren, eineindeutigen Kennung versehen - z.B. einer Nummer oder einem Code -, die der Nutzer zur ihrer Identifikation verwenden kann. Die Bildschirmmeldung muss dabei naturgemäß die Kennungen aller in Frage kommenden ersten technischen Einrichtungen enthalten, damit der Nutzer eine Auswahl treffen kann. Der Nutzer wählt eine erste technische Einrichtung aus durch eine Eingabe am Bildschirm. Die zweite technische Einrichtung sendet die Daten der ausgewählten ersten technischen Einrichtung über das zweite Datennetzwerk an den Zentralrechner, und das Pairing wird am Zentralrechner durchgeführt.

Die menschenlesbare Kennung kann dabei auf der ersten technischen Einrichtung fix montiert sein, z.B. eine statische Gerätenummer, oder ebenfalls dynamisch variiert werden, z.B. mittels eines Displays der ersten technischen Einrichtung.

In einer nochmals weiteren Ausführungsform kann jede erste technische Einrichtung mit jeweils einer individuellen maschinenlesbaren Kennung ausgestattet sein. Diese maschinenlesbare Kennung kann ein Barcode, QR-Code, NFC-Tag oder jede weitere maschinenlesbare Kennung sein, die eine zweite technische Einrichtung nur aus einem so kurzen Abstand lesen kann, dass ein Pairing sicher hergestellt werden kann. Bei dieser Ausführungsform senden mehrere erste technische Einrichtungen über ihren jeweiligen Sender jeweils Datentelegramme mit identischen Zugangskennungen(t₁) und unterschiedlichen Gerätekennung(t₂, Device). Eine zweite technische Einrichtung empfängt jeweils wenigstens ein Datentelegramm von mehreren ersten technischen Einrichtungen. Aufgrund der Tatsache, dass die zweite technische Einrichtung Datentelegramme von mehreren unterschiedlichen ersten technischen Einrichtungen empfangen hat, wird der Nutzer über eine Bildschirmmeldung angewiesen, eine erste technische Einrichtung durch Einlesen ihrer maschinenlesbaren Kennung für das Pairing auszuwählen. Der Nutzer liest die maschinenlesbare Kennung einer ausgewählten ersten technischen Einrichtung in die zweite technische Einrichtung ein. Die zweite technische Einrichtung sendet die Daten der ausgewählten ersten technischen Einrichtung über das zweite Datennetzwerk an den Zentralrechner, und das Pairing wird am Zentralrechner durchgeführt.

Die maschinenlesbare Kennung kann dabei auf der ersten technischen Einrichtung fix montiert oder fest codiert sein, z.B. als QR-Code oder NFC-Tag, oder ebenfalls dynamisch variiert werden, z.B. mittels eines Displays oder NFC-Senders mit variierender Kennung.

Neben dem Senden von Datentelegrammen durch die ersten technischen Einrichtungen ist es in einer weiteren Ausführungsform des Verfahrens möglich, dass die zweiten technischen Einrichtungen der Nutzer die Datentelegramme senden und die ersten technischen Einrichtungen nach zweiten technischen Einrichtungen suchen, mit denen ein Pairing durchgeführt werden kann. Der Vorteil dieser Ausführungsform liegt darin, dass das "Clonen" eines Senders abermals erschwert ist, da der Sender - also eine zweite technische Einrichtung - in der Regel unter der Aufsicht des Nutzers steht. Im Gegenzug bedingt das Verfahren in dieser Ausführungsform einen aufwendigeren Datenaustausch: Die zweite technische Einrichtung agiert als Sender und die erste technische Einrichtung empfängt Datentefegramme. In diesem Fall bestimmt der Code-Generator am Zentralrechner die Zugangskennung(t₁) für alle teilnehmenden technischen Einrichtungen und jeweils genau eine Gerätekennung(t₂, Device) für jede teilnehmende zweite technische Einrichtung.

In dieser Ausführungsform überträgt der Zentralrechner, sobald die Zugangskennung(t₁) vom Code-Generator neu generiert ist, die neue Zugangskennung(t₁) als Daten über das erste Datennetzwerk an alle ersten technischen Einrichtungen und über das zweite Datennetzwerk an alle zweiten technischen Einrichtungen, die an dem erfindungsgemäßen Verfahren teilnehmen. Jede erste technische Einrichtung sucht damit nach der aktuellen Zugangskennung(t₁), um ein Pairing mit einer zweiten technischen Einrichtung durchzuführen, und jede zweite technische Einrichtung sendet Datentelegramme mit dieser Zugangskennung(t₁).

In dieser Ausführungsform überträgt der Zentralrechner, sobald der Code-Generator eine Gerätekennung(t₂, Device) für genau eine zweite technische Einrichtung generiert hat, diese Gerätekennung(t₂, Device) über das zweite Datennetzwerk an die entsprechende zweite technische Einrichtung. Jede zweite technische Einrichtung aktualisiert die Betriebsparameter ihrer Sender-Schnittstelle entsprechend, so dass sie Datentelegramme mit aktuellem Dateninhalt aussendet.

In dieser Ausführungsform empfängt eine erste technische Einrichtung wenigstens ein Datentelegramm von einer zweiten technischen Einrichtung und sendet Daten über das erste Datennetzwerk an den Zentralrechner. Diese Daten enthalten, neben der systemweit eineindeutigen Kennung der ersten technischen Einrichtung, auch die Daten aus dem von der zweiten technischen Einrichtung empfangenen Datentelegramm, nämlich wenigstens Zugangskennung(t₁) und Gerätekennung(t₂, Device). Nachdem der Zentralrechner die Daten von der ersten technischen Einrichtung empfangen hat, bestimmt er, dass sich die zweite technische Einrichtung in der Nähe von der ersten technischen Einrichtung befindet und mit dieser interagieren kann. Das erfindungsgemäße Pairing von erster und zweiter technischer Einrichtung ist damit abgeschlossen.

Das erfindungsgemäße Verfahren ermöglicht damit in verschiedenen Ausführungsformen das sichere Pairing einer ersten technischen Einrichtung mit einer zweiten technischen Einrichtung und unterbindet dabei, dass das Stehlen einer drahtlos ausgesandten Identität einer technischen Einrichtung im Rahmen des Pairings für Missbrauchszwecke genutzt werden kann.

In einer besonders bevorzugten Ausführungsform wird das erfindungsgemäße Verfahren mit Bluetooth-Low-Energie (BLE) Beacons als Sender ausgeführt, und die Datentelegramme entsprechen dem BLE-Standard. Dabei entspricht die Zugangskennung der "UUID" des BLE-Standards; die Automatenkennung bzw. die Gerätkennung sind in den "Major/Minor"-Werten eines BLE-Datentelegramms kodiert, und die automatenspezifischen Sendefeldstärkewerte entsprechen den "TX Power"-Werten des BLE-Datentelegramms.

Mit dem erfindungsgemäßen System und dem erfindungsgemäßen Verfahren ist es möglich, authentisierte Verbindungen zwischen beispielsweise Verkaufsautomaten einerseits und den Endgeräten der Nutzer andererseits herzustellen. Die erfindungsgemäße Besonderheit besteht darin, dass bereits die Pairing-Kommunikation und Abwicklung über ein Zentralrechnersystem erfolgt. Die ersten technischen Einheiten können somit in gewisser Weise "dumm" ausgestaltet sein, das heißt, sie müssen weder etwas erkennen noch etwas über den Nutzer wissen. Sie kommunizieren einfach mit dem Zentralrechner, erhalten von diesem die Kennungen, die sie zu senden haben, und Befehle, beispielsweise eine Klappe zu öffnen, eine Ware auszugeben und dergleichen.

Auf der anderen Seite kommuniziert das Endgerät des Nutzers ebenfalls ausschließlich mit dem Zentralrechner. Aufgrund des Austausches der ständig geänderten Kennungen kann der Rechner damit authentisierte Verbindungen zwischen beiden Einheiten herstellen. Damit kann auf Zentralrechnerebene auch ein Warenwirtschaftssystem geführt werden. Es ist somit dort immer bekannt, welche Verkaufseinheit welche Waren in welcher Menge vorhält. Entsprechend wird die Logistik zentralisiert und vereinfacht. Darüber hinaus kann auch zentral in Störfällen eingegriffen werden, es können mobile Endgeräte von Nutzern gesperrt werden und die Erfindung ermöglicht erstmals auch eine umgekehrte Vorgehensweise: Ein Nutzer kann auf seinem Endgerät ein Wunschprodukt oder eine Wunschliste hinterlegen. Auf diese Weise kann das Endgerät praktisch in Kommunikation mit dem Zentralrechner automatisch suchen, bis es einen entsprechenden Verkaufsautomaten gefunden hat. Verkaufsautomat im Sinne der vorliegenden Erfindung kann jegliche Warenausgabestelle sein, die mit dem System verknüpft ist. Das Endgerät des Kunden kann diesem auch den Weg zu einer entsprechenden POS weisen.

Weitere Vorteile und Merkmale ergeben sich aus der folgenden Beschreibung anhand der Figuren. Dabei zeigen:
- Fig 1:: eine verallgemeinerte Darstellung eines Ausführungsbeispiels für die erfindungsgemäßen Verfahren;
- Fig 2:: den ersten Teil des erfindungsgemäßen Verfahrens in einem erfindungsgemäßen System mit Verkaufsautomaten als erste technische Einrichtung und mobilen Endgeräten als zweite technische Einrichtung;
- Fig 3:: den zweiten Teil des erfindungsgemäßen Verfahrens in einem erfindungsgemäßen System mit Verkaufsautomaten als erste technische Einrichtung und mobilen Endgeräten als zweite technische Einrichtung;
- Fig 4:: ein Ausführungsbeispiel des erfindungsgemäßen Verfahrens, bei dem aus zwei anwesenden Verkaufsautomaten genau einer für das Pairing mit einem mobilen Endgerät bestimmt wird;
- Fig 5:: ein weiteres Ausführungsbeispiel des erfindungsgemäßen Verfahrens, bei dem aus zwei anwesenden Verkaufsautomaten genau einer für das Pairing mit einem mobilen Endgerät bestimmt wird;
- Fig 6:: ein weiteres Ausführungsbeispiel des erfindungsgemäßen Verfahrens, bei dem aus zwei anwesenden Verkaufsautomaten genau einer für das Pairing mit einem mobilen Endgerät bestimmt wird, und
- Fig 7:: ein Ausführungsbeispiel des erfindungsgemäßen Verfahrens, bei dem das mobile Endgerät als BLE-Sender agiert.

Die folgenden Ausführungen sind beispielhaft und nicht beschränkend.

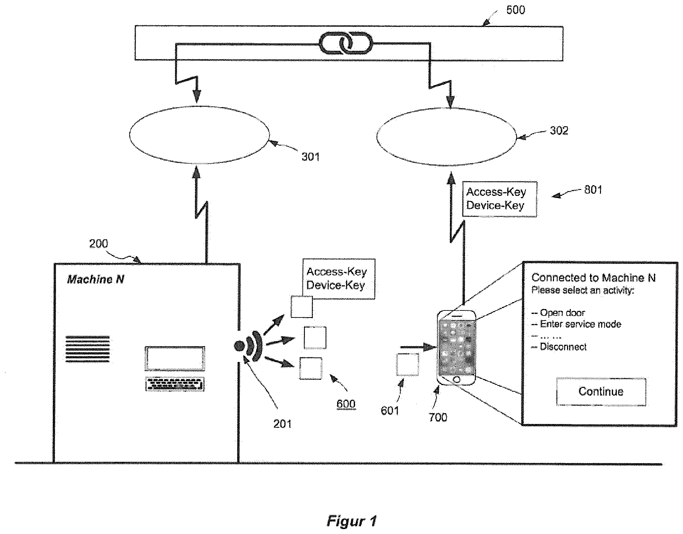

Die Verkaufsautomaten in Figuren 1 - 7 verwenden Bluetooth-Low-Energie (BLE) Beacons als Sender. Die Datentelegramme entsprechen dem BLE-Standard, wobei die Datenfelder aus dem BLE-Standard wie folgt verwendet werden: Die "UUID" (16 Byte Dateninhalt) gibt die Zugangskennung wieder; in den "Major/Minor"-Werten (4 Byte) ist die Gerätekennung kodiert, und die "TX Power"-Werte (1 Byte) enthalten die gerätespezifischen Sendefeldstärkewerte.

Die Figuren 1 - 7 beschreiben das erfindungsgemäße gesicherte Pairing zwischen einem Verkaufsautomaten und einem mobilen Endgerät für den Zweck der Durchführung einer nachfolgenden Verkaufstransaktion. D.h. die Figuren 1 - 7 konzentrieren sich auf das Pairing und beschreiben nicht die Verkaufstransaktion.

Verkaufstransaktionen sind beispielsweise die Vorgänge, bei denen sich ein Nutzer aus dem Angebot ein Produkt auswählt und auf seinem Endgerät bestätigt, dass er dieses Produkt erwerben will. Unter Nutzung des erfindungsgemäßen Systems wird diese Information an den Zentralrechner weitergeleitet. Dieser veranlasst dann den gepairten Automaten, die entsprechende Ausgabe vorzunehmen. Eine direkte Verbindung zwischen Endgerät und Verkaufsautomat, abgesehen von der Sendung der Kennungen, ist dann nicht erforderlich,

**Figur 1** verdeutlicht generell ein Verfahren: In einem System sind erste technische Einrichtungen, von denen Figur 1 eine Einrichtung 200 beispielhaft zeigt, mittels eines ersten Datennetzes 301 verbunden mit einem Zentralrechner 500. Die ersten technischen Einrichtungen sind mit einem Sender 201 ausgestattet, und der Sender sendet periodisch Datentelegramme 600 aus; das Aussenden geschieht drahtlos und in begrenzter Sendereichweite, so dass die Datentelegramme nur in geringer Entfernung von der ersten technischen Einrichtung empfangen werden, typisch etwa bis zu 3 Metern Abstand.

Das System umfasst weiter eine zweite technische Einrichtung (hier: ein mobiles Endgerät 700), die mit der ersten technischen Einrichtung gepairt werden soll. Die Datentelegramme sind für zweite technische Einrichtungen lesbar und enthalten eine Zugangskennung für das Verfahren und eine Gerätekennung, die die erste technische Einrichtung 200 im System eineindeutig identifiziert.

Die zweite technische Einrichtung ist mit dem Zentralrechner über ein zweites Datennetz 302 verbunden. Sobald die zweite technische Einrichtung ein Datentelegramm 601 von der ersten technischen Einrichtung empfängt, sendet sie Daten 801 an den Zentralrechner. Diese Daten enthalten, neben der systemweit eineindeutigen Kennung der zweiten technischen Einrichtung, auch die Daten aus dem von der ersten technischen Einrichtung empfangenen Datentelegramm, nämlich die Zugangskennung und die Gerätekennung. Die Zugangskennung ist dabei für alle ersten technischen Einrichtungen im System gleich und ermöglicht der zweiten technischen Einrichtung, überhaupt zu erkennen, dass es ein Datentelegramm von einer zu dem System gehörigen ersten technischen Einrichtung empfangen hat. Nachdem der Zentralrechner die Daten von der zweiten technischen Einrichtung empfangen hat, erkennt er, dass sich die zweite technische Einrichtung in der Nähe von der ersten technischen Einrichtung befindet und mit dieser nun interagieren kann. In diesem Moment ist also am Zentralrechner ein sogenanntes Pairing von erster und zweiter technischer Einrichtung durchgeführt worden.

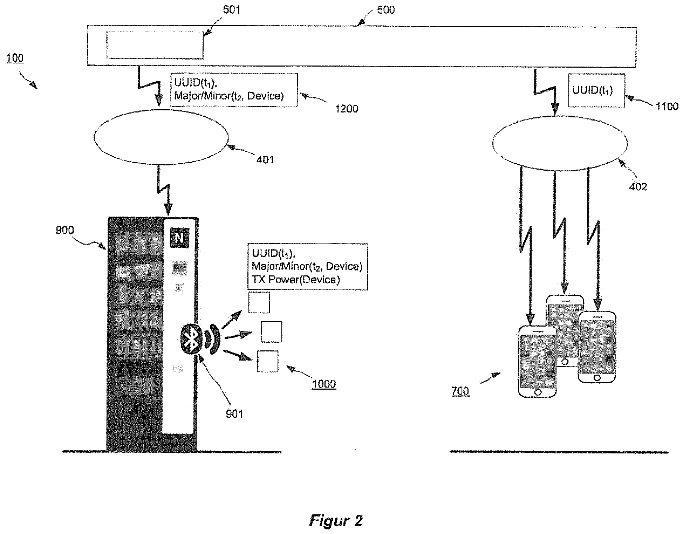

Ausgehend von dem im Figur 1 im Sinne eines Überblicks beschriebenen Beispiel ist in **Figur 2** ein System 100 beschrieben, bei dem die Inhalte eines BLE Datentelegramms 1000 veränderlich sind; d.h. die UUID und die Major/Minor-Werte werden zeitabhängig neu generiert als UUID(t₁) und Major/Minor(t₂, Device). Dazu ist der Zentralrechner 500 mit einem Code-Generator 501 ausgerüstet. Diese Code-Generator 501 generiert periodisch neue Werte UUID(t₁) und Major/Minor(t₂, Device), wobei in dem Ausführungsbeispiel UUID(t₁) einmal täglich neu generiert wird und Major/Minor(t₂, Device) alle 5 Minuten.

Sobald einer der Werte vom Code-Generator 500 neu generiert ist, überträgt der Zentralrechner 500 die neuen Werte als Daten 1200 über das Automatendatennetz 401 an alle Verkaufsautomaten 900. Jeder Verkaufsautomat 900 aktualisiert die Betriebsparameter seines BLE-Beacons 901 entsprechend, so dass jeder Verkaufsautomat 900 BLE-Datentelegramme 1000 mit aktuellem Dateninhalt aussendet.

Sobald UUID(t₁) vom Code-Generator 500 neu generiert ist, überträgt der Zentralrechner 500 die neue UUID(t₁) als Daten 1100 über das mobile Datennetz 402 an alle mobilen Endgeräte 700, die an dem erfindungsgemäßen Verfahren teilnehmen. Jedes mobile Endgerät 700 sucht damit nach aktuellen UUID(t₁) um ein Pairing mit einem Verkaufsautomaten 900 zu initiiteren.

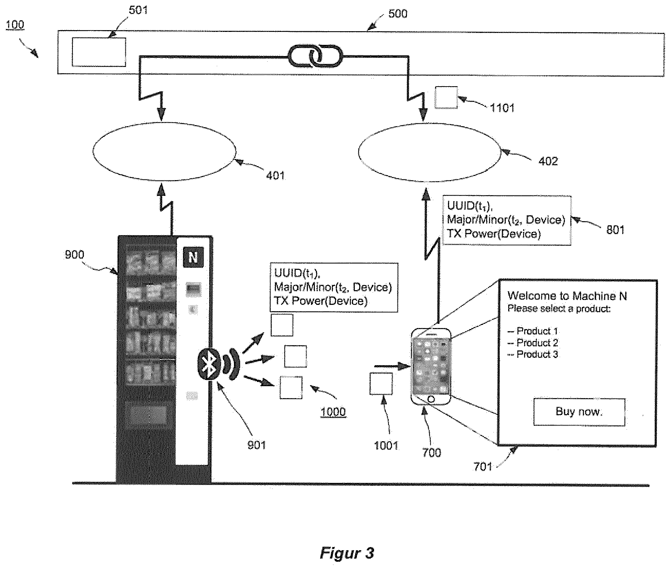

**Figur 3** beschreibt den zweiten Schritt des erfindungsgemäßen Verfahrens. Die Verkaufsautomaten 900 senden sekündlich BLE Datentelegramme mit den Daten UUID(t₁), Major/Minor(t₂, Device) und TX Power(Device) aus. Ein mobiles Endgerät 700 empfängt ein Datentelegramm 1001 von einem Verkaufsautomaten 900.

Das mobile Endgerät 700 startet die systemgemäße App und sendet Daten 801 über das mobile Datennetz 402 an den Zentralrechner 500. Diese Daten 801 enthalten, neben der eigenen Mobilfunknummer des Endgeräts 700, auch die Daten aus dem von dem Verkaufsautomaten 900 empfangenen Datentelegramm 1001, nämlich UUID(t₁), Major/Minor(t₂, Device) und TX Power(Device). Nachdem der Zentralrechner 500 die Daten 801 vom mobilen Endgerät 700 empfangen hat, weiß der Zentralrechner 500, dass sich das mobile Endgerät in der Nähe von Verkaufsautomat 900 befindet Der Zentralrechner pairt den Verkaufsautomaten 900 und das mobile Endgerät 700 durch Herstellen eines datentechnischen Austauschs von Zustandsdaten, Kommandos und Bestätigungen zwischen beiden Geräten. Das erfindungsgemäße Pairing von Verkaufsautomat 900 und mobilem Endgerät 700 ist damit abgeschlossen.

Nachdem das Pairing durchgeführt ist, sendet der Zentralrechner 500 über das mobile Datennetz 402 Daten 1101 an das mobile Endgerät 700. Diese Daten enthalten insbesondere Angaben zu Waren, die der Verkaufsautomat 900 verkaufsbereit beinhaltet, also eine Liste von verfügbaren Artikeln und Preisen. Diese Liste wird auf dem Bildschirm des mobilen Endgeräts zur Anzeige gebracht 701, und der im System 100 registrierte Nutzer kann einen Artikel wählen und kaufen.

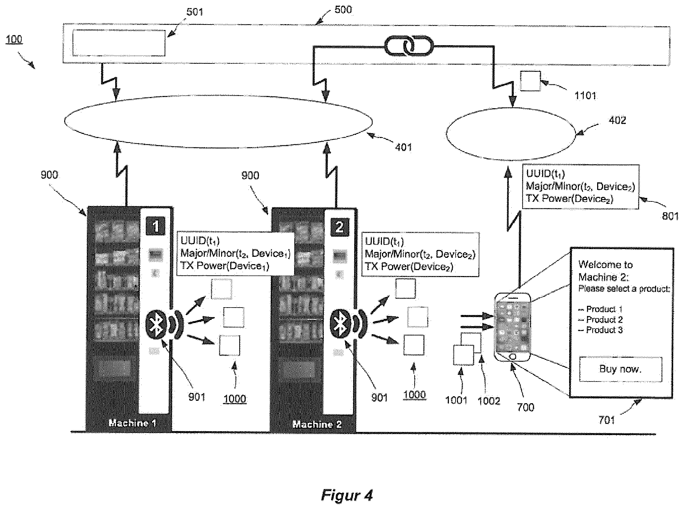

**Figur 4** beschreibt ein Verfahren für das Pairing zwischen einem Verkaufsautomaten und einem mobilen Endgerät für den Fall, dass an einem Standort mehrere Verkaufsautomaten 900 nebeneinander stehen, so dass für ein mobiles Endgerät 700 aus mehreren Verkaufsautomaten 900 genau einer bestimmt werden muss, mit dem ein Pairing durchgeführt werden soll. Beispielhaft sind in Figur 4 zwei Verkaufsautomaten dargestellt, es können aber auch mehr Verkaufsautomaten an einem Standort stehen.

Beide Verkaufsautomaten 900 senden über ihr jeweiliges BLE-Beacon 901 jeweils BLE-Datentelegramme 1000 mit identischen UUID(t₁) und unterschiedlichen Major/Minor(t₂, Device₁) und Major/Minor(t₂, Device₂) und unterschiedlichen Sendefeldstärkewerten TX Power(Device₁) und TX Power(Device₂). Ein mobiles Endgerät 700 empfängt jeweils ein BLE-Datentelegramm 1001 von Verkaufsautomat Nr. 1 und ein BLE-Datentelegramm 1002 von Verkaufsautomat Nr. 2 und startet die systemgemäße App. Aufgrund der Auswertung der empfangenen Sendefeldstärkewerte TX Power(Device₁) und TX Power(Device₂) und der gemessenen Empfangsfeldstärke der Datentelegramme 1001, 1002 entscheidet die App, dass sich das mobile Endgerät näher an Verkaufsautomat Nr. 2 befindet als an Verkaufsautomat Nr. 1. Das mobile Endgerät 700 sendet nun neben seiner eigenen Mobilfunknummer die Daten 801 des Verkaufsautomaten Nr. 2 über das mobile Datennetz 402 an den Zentralrechner, und der Zentralrechner 500 führt das Pairing von mobilem Endgerät und Verkaufsautomat Nr. 2 durch.

Nachdem das Pairing durchgeführt ist, sendet der Zentralrechner 500 über das mobile Datennetz 402 Daten 1101 an das mobile Endgerät 700. Diese Daten enthalten eine Liste von verfügbaren Artikeln und Preisen, die der Verkaufsautomat 900 verkaufsbereit beinhaltet. Diese Liste wird auf dem Bildschirm des mobilen Endgeräts zur Anzeige gebracht 701, und der im System 100 registrierte Nutzer kann einen Artikel wählen und kaufen.

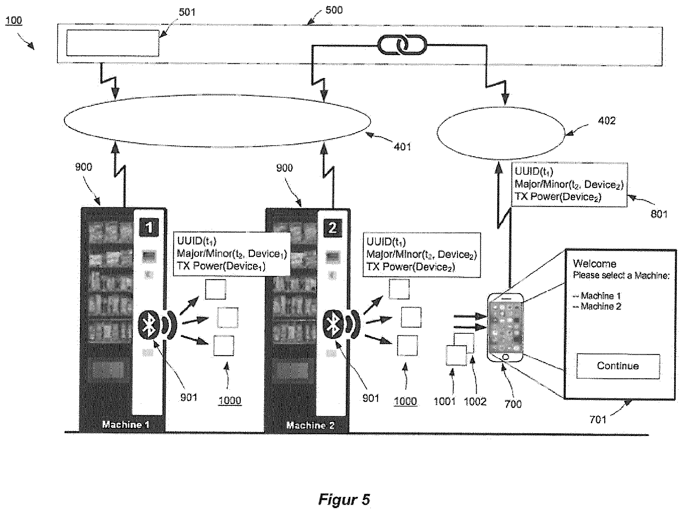

**Figur 5** beschreibt ein Pairing zwischen einem Verkaufsautomaten und einem mobilen Endgerät für den Fall, dass an einem Standort mehrere Verkaufsautomaten 900 nebeneinander stehen, so dass für ein mobiles Endgerät 700 aus mehreren Verkaufsautomaten 700 genau einer bestimmt werden muss, mit dem ein Pairing durchgeführt werden soll. Beispielhaft sind in Figur 5 zwei Verkaufsautomaten dargestellt, bezeichnet als Nr. 1 und Nr. 2, es können aber auch mehr Verkaufsautomaten an einem Standort stehen.

Beide Verkaufsautomaten 900 senden über ihr jeweiliges BLE-Beacon 901 jeweils BLE-Datentelegramme 1000 mit identischen UUID(t₁) und unterschiedlichen Major/Minor(t₂, Device₁) und Major/Minor(t₂, Device₂) und unterschiedlichen Sendefeldstärkewerten TX Power(Device₁) und TX Power(Device₂). Ein mobiles Endgerät 700 empfängt jeweils ein BLE-Datentelegramm 1001 von Verkaufsautomat Nr. 1 und ein BLE-Datentelegramm 1002 von Verkaufsautomat Nr. 2 und startet die systemgemäße App. Aufgrund der Tatsache, dass die App Datentelegramm von zwei unterschiedlichen Verkaufsautomaten empfangen hat, wird dem Nutzer über eine Bildschirmmeldung 701 eine Liste der auswählbaren Verkaufsautomaten dargestellt. Der Nutzer wählt einen Verkaufsautomaten aus (im Beispiel: Verkaufsautomat Nr. 2) durch eine Eingabe am Bildschirm. Das mobile Endgerät 700 sendet neben seiner eigenen Mobilfunknummer die Daten 801 des Verkaufsautomaten Nr. 2 über das mobile Datennetz 402 an den Zentralrechner, und der Zentralrechner 500 führt das Pairing von mobilem Endgerät und Verkaufsautomat Nr. 2 durch.

Nachdem das Pairing durchgeführt ist, sendet der Zentralrechner über das mobile Netzwerk Daten an das mobile Endgerät. Diese Daten enthalten eine Liste von verfügbaren Artikeln und Preisen, die der Verkaufsautomat verkaufsbereit beinhaltet. Diese Liste wird auf dem Bildschirm des mobilen Endgeräts zur Anzeige gebracht, und der im System registrierte Nutzer kann einen Artikel wählen und kaufen (nicht gezeigt in Figur 5).

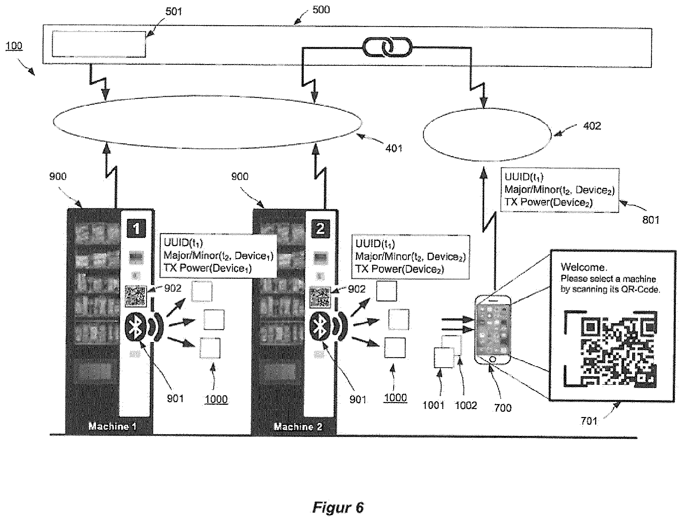

**Figur 6** beschreibt ein weiteres Verfahren für das Pairing zwischen einem Verkaufsautomaten und einem mobilen Endgerät für den Fall, dass an einem Standort mehrere Verkaufsautomaten 900 nebeneinander stehen, so dass für ein mobiles Endgerät 700 aus mehreren Verkaufsautomaten 900 genau einer bestimmt werden muss, mit dem ein Pairing durchgeführt werden soll. Beispielhaft sind in Figur 6 zwei Verkaufsautomaten dargestellt, bezeichnet als Nr. 1 und Nr. 2, es können aber auch mehr Verkaufsautomaten an einem Standort stehen. Für das Ausführungsbeispiel gemäß Figur 6 sind die Verkaufsautomaten 900 jeweils mit einem automatenindividuellen QR-Code 902 ausgestattet, der von mobilen Endgeräten gescannt werden kann.

Beide Verkaufsautomaten 900 senden über ihr jeweiliges BLE-Beacon 901 jeweils BLE-Datentelegramme 1000 mit identischen UUID(t₁) und unterschiedlichen Major/Minor(t₂, Device₁) und Major/Minor₂ (t₂, Device₂) und unterschiedlichen Sendefeldstärkewerten TX Power(Device₁) und TX Power(Device₂). Ein mobiles Endgerät 700 empfängt jeweils ein BLE-Datentelegramm 1001 von Verkaufsautomat Nr. 1 und ein BLE-Datentelegramm 1002 von Verkaufsautomat Nr. 2 und startet die systemgemäße App. Aufgrund der Tatsache, dass die App Datentelegramm von zwei unterschiedlichen Verkaufsautomaten empfangen hat, wird der Nutzer über eine Bildschirmmeldung 701 angewiesen, einen Verkaufsautomaten durch Einscannen seines QR-Codes auszuwählen. Der Nutzer scannt den QR-Code 902 eines Verkaufsautomaten (im Beispiel: Verkaufsautomat Nr. 2). Das mobile Endgerät 700 sendet neben seiner eigene Mobilfunknummer die Daten 801 des Verkaufsautomaten Nr. 2 über das mobile Datennetz 402 an den Zentralrechner, und der Zentralrechner 500 führt das Pairing von mobilem Endgerät und Verkaufsautomat Nr. 2 durch.

Nachdem das Pairing durchgeführt ist, sendet der Zentralrechner über das mobile Netzwerk Daten an das mobile Endgerät. Diese Daten enthalten eine Liste von verfügbaren Artikeln und Preisen, die der Verkaufsautomat verkaufsbereit beinhaltet. Diese Liste wird auf dem Bildschirm des mobilen Endgeräts zur Anzeige gebracht, und der im System registrierte Nutzer kann einen Artikel wählen und kaufen (nicht gezeigt in Figur 6).

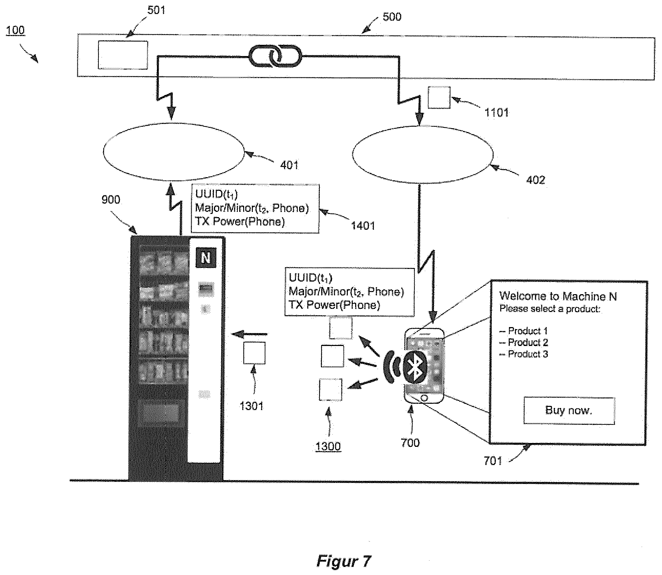

**Figur 7** beschreibt ein Ausführungsbeispiel des erfindungsgemäßen Verfahrens, bei dem das mobile Endgerät als BLE-Sender agiert und der Verkaufsautomat 900 BLE-Datentelegramme 1300 vom mobilen Endgerät empfängt. In diesem Fall bestimmt der Code-Generator 501 am Zentralrechner 500 die UUID(t₁) für alle teilnehmenden Verkaufsautomaten 900 und für die mobilen Endgeräte 700. Weiter bestimmt der Code-Generator 501 am Zentralrechner 500 jeweils genau einen Wert Major/Minor(t₂, Phone) für jedes teilnehmende mobile Endgerät 700.

Sobald UUID(t₁) vom Code-Generator 500 neu generiert ist, überträgt der Zentralrechner 500 die neue UUID(t₁) als Daten über das Automatendatennetz 401 an alle Verkaufsautomaten 900 und über das mobile Datennetz 402 an alle mobilen Endgeräte 700, die an dem erfindungsgemäßen Verfahren teilnehmen. Jeder Verkaufsautomat 900 sucht damit nach aktuellen UUID(t₁), um ein Pairing mit einem mobilen Endgerät 700 durchzuführen, und jedes mobile Endgerät sendet BLE-Datentelegramm mit dieser UUID(t₁), sobald ein Nutzer die verfahrensgemäße App startet.

Sobald der Code-Generator einen Wert Major/Minor(t₂, Phone) für genau ein mobiles Endgerät generiert hat, überträgt der Zentralrechner 500 diesen Wert Major/Minor(t₂, Phone) über das mobile Datennetz 402 an das entsprechende mobile Endgerät 700. Jedes mobile Endgerät 700 aktualisiert die Betriebsparameter seiner Bluetooth-Schnittstelle entsprechend, so dass jedes mobile Endgerät BLE-Datentelegramme 1300 mit aktuellem Dateninhalt aussendet, sobald ein Nutzer die verfahrensgemäße App startet.

Sobald ein Nutzer die verfahrensgemäße App startet, sendet sein mobiles Endgerät 700 sekündlich BLE Datentelegramme 1300 mit den Daten UUID(t₁), Major/Minor(t₂, Phone) und TX Power(Phone) aus. Ein Verkaufsautomat 900 empfängt ein Datentelegramm 1301 von dem mobilen Endgerät 700.

Der Verkaufsautomat sendet Daten 1401 über das Automatendatennetz 401 an den Zentralrechner 500. Diese Daten 1401 enthalten, neben der systemweit eineindeutigen fixen Kennung des Verkaufsautomaten 900, auch die Daten aus dem von dem mobilen Endgerät 700 empfangenen Datentelegramm 1301, nämlich UUID(t₁), Major/Minor(t₂, Phone) und TX Power(Phone). Nachdem der Zentralrechner 500 die Daten 1401 vom Verkaufsautomaten 900 empfangen hat, weiß der Zentralrechner 500, dass sich das mobile Endgerät 700 in der Nähe von Verkaufsautomat 900 befindet, und der Zentralrechner 500 führt das Pairing von mobilem Endgerät 700 und Verkaufsautomat 900 durch.

Nachdem das Pairing durchgeführt ist, sendet der Zentralrechner 500 über das mobile Datennetz 402 Daten 1101 an das mobile Endgerät 700. Diese Daten enthalten eine Liste von verfügbaren Artikeln und Preisen, die der Verkaufsautomat 900 verkaufsbereit beinhaltet. Diese Liste wird auf dem Bildschirm des mobilen Endgeräts zur Anzeige gebracht 701, und der im System 100 registrierte Nutzer kann einen Artikel wählen und kaufen.

**Bezugszeichen**
- 100: System
- 200: erste technische Einrichtung
- 201: Sender
- 301: erstes Datennetz
- 302: zweites Datennetz
- 401: Automatendatennetz
- 402: mobiles Datennetz
- 500: Zentralrechner
- 501: Code-Generator
- 600: Datentelegramme
- 601: Datentelegramm
- 700: mobiles Endgerät
- 701: Bildschirminhalt des mobilen Endgeräts
- 801: Daten, übertragen von einem mobilen Endgerät an den Zentralrechner
- 900: Verkaufsautomat
- 901: Bluetooth-Low-Energie Beacon im Verkaufsautomaten
- 902: automatenindividueller QR-Code
- 1000: BLE-Datentelegramme des Verkaufsautomaten
- 1001: BLE-Datentelegramm des Verkaufsautomaten
- 1002: BLE-Datentelegramm des Verkaufsautomaten
- 1100: Daten, übertragen vom Zentralrechner an mobile Endgeräte
- 1101: Daten, übertragen vom Zentralrechner an ein mobiles Endgerät
- 1200: Daten, übertragen vom Zentralrechner an Verkaufsautomaten
- 1300: BLE-Datentelegramme des mobilen Endgeräts
- 1301: BLE-Datentelegramm des mobilen Endgeräts
- 1401: Daten, übertragen von einem Verkaufsautomaten an den Zentralrechner

## Patentansprüche

1. Verfahren für das Pairing von genau einem ersten Typ technischer Einrichtungen, erste technische Einrichtung (200), mit genau einem zweiten Typ technischer Einrichtungen, zweite technische Einrichtung (700) wobei das Verfahren folgende Schritte umfasst:
a) Generieren von Zugangskennungen für erste technische Einrichtungen, Speichern dieser mit Bezug auf die ersten technischen Einrichtungen und Senden dieser an die ersten und zweiten technischen Einrichtungen durch das Zentralrechnersystem, (500),
b) Empfangen und Speichern, in den ersten und zweiten technischen Einrichtungen, der gesendeten Zugangskennung,
c) Generieren von Gerätekennungen für einzelne erste technische Einrichtungen, Speichern dieser mit Bezug auf die entsprechenden ersten technischen Einrichtungen und Senden dieser an die ersten technischen Einrichtungen durch das Zentralrechnersystem,
d) Empfangen und Speichern, in den ersten technischen Einrichtungen, der Gerätekennung,
e) periodisch wiederholtes Aussenden im Nahbereich empfangbarer Zugangskennungen, durch einen Sender in den ersten technischen Einrichtungen, wobei ein Datentelegramm ausgesendet wird, welches die Zugangskennung und die Gerätekennung der ersten technischen Einrichtung enthält,
f) Empfangen der Zugangskennungen durch die zweite technische Einrichtung, wobei bei Empfang wenigstens eines zulässigen Datentelegramms von wenigstens einer ersten technischen Einrichtung durch eine zweite technische Einrichtung Komma zuviel das Pairing mit der ersten technischen Einrichtung eingeleitet wird,
g) bei Einleitung Senden eines Datensatzes an den Zentralrechner durch die zweite technische Einrichtung, welcher Datensatz wenigstens enthält: eine eineindeutige Kennung der zweiten technischen Einrichtung und die Gerätkennung der ersten technischen Einrichtung,
h) Empfangen, durch den Zentralrechner, des Datensatzes von der zweiten technischen Einrichtung und Pairing der ersten technischen Einrichtung und der zweiten technischen Einrichtung für einen datentechnischen Austausch zwischen beiden technischen Einrichtungen.

2. Verfahren nach Anspruch 1, **dadurch gekennzeichnet, dass** in Schritt f) die zweite technische Einrichtung anhand der Auswertung empfangener Sendefeldstärkewerte und gemessener Empfangsfeldstärken aus mehreren zulässigen Datentelegrammen die erste technische Einrichtung automatisch bestimmt,

3. Verfahren nach einem der vorangehenden Ansprüche, **dadurch gekennzeichnet, dass** in Schritt f) die zweite technische Einrichtung den Nutzer auffordert, eine zu pairende erste technische Einrichtung auszuwählen und durch Einlesen einer maschinenlesbaren Kennung oder durch eine Eingabe am Bildschirm der zweiten technischen Einrichtung zu identifizieren.

4. Verfahren nach einem der vorangehenden Ansprüche, **dadurch gekennzeichnet, dass** die Schritte a) und b) periodisch wiederholt werden.

5. Verfahren nach einem der vorangehenden Ansprüche, **dadurch gekennzeichnet, dass** die Schritte c) bis d) periodisch wiederholt werden.

6. Verfahren nach einem der vorangehenden Ansprüche, **dadurch gekennzeichnet, dass** als erste technische Einrichtungen Verkaufsautomaten eingesetzt werden.

7. Verfahren nach einem der vorangehenden Ansprüche, **dadurch gekennzeichnet, dass** als Sender in den ersten technischen Einrichtungen ein Bluetooth-Beacon verwendet wird.

8. Verfahren nach Anspruch 7), **dadurch gekennzeichnet, dass** ein Bluetooth-Low-Energie-Beacon verwendet wird.

9. Verfahren nach einem der vorangehenden Ansprüche, **dadurch gekennzeichnet, dass** als zweite technische Einrichtungen mobile Endgeräte verwendet werden.

10. Verfahren nach einem der vorangehenden Ansprüche, **dadurch gekennzeichnet, dass** die Verfahrensschritte auf den zweiten technischen Einrichtungen durch eine mobile Applikation, App, gesteuert werden.

11. Verfahren nach einem der vorangehenden Ansprüche, **dadurch gekennzeichnet, dass** als zweite technische Einrichtungen Smartphones, Tablet-Computer, Spielkonsolen, Laptop-Computer, Netbooks, Datenbrillen oder Smart-Watches verwendet werden.

12. System für das Pairing von genau einem ersten Typ technischer Einrichtungen, erste technische Einrichtung, (200), mit genau einem zweiten Typ technischer Einrichtungen, zweite technische, Einrichtung (700) nach dem Verfahren nach wenigstens einem der Ansprüche 1) bis 11), wobei die technischen Einrichtungen datenkommunikationsfähig sind, wobei ein Zentralrechnersystem zur Abwicklung einer Datenkommunikation zwischen einer ersten und einer zweiten technischen Einrichtung eingesetzt ist, wobei das Zentralrechnersystem zum Generieren, Speichern, Senden und Empfangen von Kennungen ausgelegt ist.

13. System nach Anspruch 12), **dadurch gekennzeichnet, dass** die zweite technische Einrichtung eine Einheit zur Auswertung empfangener Sendefeldstärkewerte und gemessener Empfangsfeldstärken aus den zulässigen Datentelegrammen aufweist.

14. System nach einem der Ansprüche 12) bis 13), **dadurch gekennzeichnet, dass** die ersten technischen Einrichtungen Verkaufsautomaten sind.

15. System nach einem der Ansprüche 12) bis 14), **dadurch gekennzeichnet, dass** die zweiten technischen Einrichtungen mobile Endgeräte sind.

16. System nach Anspruch 15), **dadurch gekennzeichnet, dass** die zweiten technischen Einrichtungen Smartphones, Tablet-Computer, Spielkonsolen, Laptop-Computer, Netbooks, Datenbrillen oder Smart-Watches sind.

## Claims

1. A method for the pairing of exactly one first type of technical devices, first technical device (200), with exactly one second type of technical devices, second technical device (700), wherein the method comprises the following steps:
a) generating access identifiers of first technical devices, storing these ones with respect to the first technical devices and sending these ones to the first and second technical devices by the central computer system (500),
b) receiving and storing the sent access identifier in the first and second technical devices,
c) generating device identifiers of individual first technical devices, storing these ones with respect to the corresponding first technical devices and sending these ones to the first technical devices by the central computer system,
d) receiving and storing the device identifier in the first technical devices,
e) periodically repeatedly sending out access identifiers, which are receivable in the close range, by a transmitter in the first technical devices, wherein a data telegram is sent out, which contains the access identifier and the device identifier of the first technical device,
f) receiving the access identifiers by the second technical device, wherein if a second technical device receives at least one admissible data telegram from at least one first technical device, the pairing with the first technical device will be initiated,
g) in case of an initiation, sending a data set by the second technical device to the central computer, which data set contains at least: an unequivocal identifier of the second technical device and the device identifier of the first technical device,
h) receiving the data set from the second technical device by the central computer and pairing the first technical device and the second technical device for a data exchange between both technical devices.

2. A method according to claim 1, **characterized in that** in step f) the second technical device automatically determines the first technical device on the base of the evaluation of received sending field strength values and measured reception field strengths from several admissible data telegrams.

3. A method according to one of the preceding claims, **characterized in that** in step f) the second technical device asks the user to select a first technical device to be paired and to identify this one by reading in a machine-readable identifier or by making an entry on the display of the second technical device.

4. A method according to one of the preceding claims, **characterized in that** the steps a) and b) are repeated periodically.

5. A method according to one of the preceding claims, **characterized in that** the steps c) through d) are repeated periodically.

6. A method according to one of the preceding claims, **characterized in that** vending machines are used as first technical devices.

7. A method according to one of the preceding claims, **characterized in that** a Bluetooth beacon is used as transmitter in the first technical devices.

8. A method according to claim 7, **characterized in that** a Bluetooth-Low-Energy beacon is used.

9. A method according to one of the preceding claims, **characterized in that** mobile terminals are used as second technical devices.

10. A method according to one of the preceding claims, **characterized in that** the process steps are controlled on the second technical devices by a mobile application, app.

11. A method according to one of the preceding claims, **characterized in that** smartphones, tablet computers, games consoles, laptop computers, netbooks, data glasses or smart watches are used as second technical devices.

12. A system for the pairing of exactly one first type of technical devices, first technical device (200), with exactly one second type of technical devices, second technical device (700) according to the method according to at least one of the claims 1 through 11, wherein the technical devices are able to communicate data, wherein a central computer system is used for carrying out a data communication between a first and a second technical device, wherein the central computer system is adapted for generating, storing , sending and receiving identifiers.

13. A system according to claim 12, **characterized in that** the second technical device comprises a unit for evaluating received sending field strength values and measured reception field strengths from the admissible data telegrams.

14. A system according to one of the claims 12 through 13, **characterized in that** the first technical devices are vending machines.

15. A system according to one of the claims 12 through 14, **characterized in that** the second technical devices are mobile terminals.

16. A system according to claim 15, **characterized in that** the second technical devices are smartphones, tablet computers, games consoles, laptop computers, netbooks, data glasses or smart watches.

## Revendications

1. Procédé d'appariement de précisément un premier type de dispositifs techniques, premier dispositif technique (200), et de précisément un deuxième type de dispositifs techniques, deuxième dispositif technique (700), le procédé comprenant les étapes suivantes de :
a) générer des identifiants d'accès pour de premiers dispositifs techniques, stocker ceux-ci par rapport aux premiers dispositifs techniques et envoyer ceux-ci aux premiers et aux deuxièmes dispositifs techniques par le système d'ordinateur central (500),
b) recevoir et stocker l'identifiant d'accès dans les premiers et deuxièmes dispositifs techniques,
c) générer des identifiants de dispositif pour de premiers dispositifs techniques individuels, stocker ceux-ci rapport aux premiers dispositifs techniques correspondants et envoyer ceux-ci aux premiers dispositifs techniques par le système d'ordinateur central,
d) recevoir et stocker l'identifiant de dispositif dans les premiers dispositifs techniques,
e) envoyer périodiquement de manière répétée des identifiants d'accès recevables dans la zone proche par un émetteur dans les premiers dispositifs techniques, dans lequel un télégramme de données est émis, qui contient l'identifiant d'accès et l'identifiant de dispositif du premier dispositif technique,
f) recevoir les identifiants d'accès par un deuxième dispositif technique, dans lequel si un deuxième dispositif technique reçoit au moins un télégramme de données admis d'au moins un premier dispositif technique, l'appariement avec le premier dispositif technique est initié,
g) en cas d'une initiation, envoyer un jeu de données à l'ordinateur central par le deuxième dispositif technique, lequel jeu de données contient au moins : un identifiant univoque du deuxième dispositif technique et l'identifiant de dispositif du premier dispositif technique,
h) recevoir le jeu de données du deuxième dispositif technique par l'ordinateur central et l'appariement du premier dispositif technique et du deuxième dispositif technique pour un échange de données entre les deux dispositifs techniques.

2. Procédé selon la revendication 1, **caractérisé en ce que** dans l'étape f) le deuxième dispositif technique détermine automatiquement le premier dispositif technique sur la base de l'évaluation de valeurs d'intensité de champs d'émission et d'intensités de champ de réception mesurées dans plusieurs télégrammes de données admis.

3. Procédé selon l'une des revendications précédentes, **caractérisé en ce que** dans l'étape f) le deuxième dispositif technique demande à l'utilisateur de sélectionner un premier dispositif technique à coupler et de l'identifier en lisant un identifiant lisible par une machine ou en faisant une entrée sur l'écran du deuxième dispositif technique.

4. Procédé selon l'une des revendications précédentes, **caractérisé en ce que** les étapes a) et b) sont répétées périodiquement.

5. Procédé selon l'une des revendications précédentes, **caractérisé en ce que** les étapes c) à d) sont répétées périodiquement.

6. Procédé selon l'une des revendications précédentes, **caractérisé en ce que** des distributeurs automatiques sont utilisés comme premiers dispositifs techniques.

7. Procédé selon l'une des revendications précédentes, **caractérisé en ce qu'**un balise Bluetooth est utilisé comme émetteur dans les premiers dispositifs techniques.

8. Procédé selon la revendication 7, **caractérisé en ce qu'**un balise Bluetooth basse consommation est utilisé.

9. Procédé selon l'une des revendications précédentes, **caractérisé en ce que** des terminaux mobiles sont utilisés comme deuxièmes dispositifs techniques.

10. Procédé selon l'une des revendications précédentes, **caractérisé en ce que** les étapes de procédé sont commandées sur le deuxième dispositif technique par une application mobile, app.

11. Procédé selon l'une des revendications précédentes, **caractérisé en ce que** des téléphones intelligents, des tablettes informatiques, des consoles de jeu, des ordinateurs portables, des notebooks, des lunettes de données ou des montres intelligentes sont utilisés comme deuxièmes dispositifs techniques.

12. Système d'appariement de précisément un premier type de dispositifs techniques, premier dispositif technique (200), et de précisément un deuxième type de dispositifs techniques, deuxième dispositif technique (700), selon le procédé selon au moins une des revendications 1 à 11, dans lequel les dispositifs techniques sont capables de communiquer des données, dans lequel un système d'ordinateur central est utilisé pour effectuer une communication de données entre un premier et un deuxième dispositifs techniques, le système d'ordinateur central étant adapté pour générer, stocker, envoyer et recevoir des identifiants.

13. Système selon la revendication 12, **caractérisé en ce que** le deuxième dispositif technique comprend une unité pour évaluer des valeurs d'intensité de champ d'émission et des intensités de champ de réception mesurées à partir des télégrammes de données admis.

14. Système selon l'une des revendications 12 à 13, **caractérisé en ce que** des premiers dispositifs techniques sont des distributeurs automatiques.

15. Système selon l'une des revendications 12 à 14, **caractérisé en ce que** les deuxièmes dispositifs techniques sont des terminaux mobiles.

16. Système selon la revendication 15, **caractérisé en ce que** les euxièmes dispositifs techniques sont des téléphones intelligents, des tablettes informatiques, des consoles de jeu, des ordinateurs portables, des notebooks, des lunettes de données ou des montres intelligentes.
